# FASCICULE DE BREVET EUROPEEN

(11) **EP 3 440 126 B1**
(45) Date de publication et mention de la délivrance du brevet: **05.06.2024**
(21) Numéro de dépôt: 17722084.5
(22) Date de dépôt: 03.04.2017
(51) Int. Cl.: C08J 5/18

(54) **PROCÉDÉ D'OBTENTION DE FILMS FINS ET ARTICLES FILMOGENES**
VERFAHREN ZUR GEWINNUNG VON DÜNNFILMEN UND FILMBILDENDEN ARTIKELN
PROCESS FOR OBTAINING THIN FILMS AND FILM-FORMING ARTICLES

(30) Priorité: 05.04.2016 FR 1652961
(43) Date de publication de la demande: 13.02.2019
(73) Titulaire: Gaylord Chemical Company LLC, Slidell LA 70458 (US)
(72) Inventeur: SCHMITT, Paul Guillaume, 64230 Lescar (FR); MONGUILLON, Bernard, 64100 Bayonne (FR)
(74) Mandataire: Ter Meer Steinmeister & Partner
(86) Numéro de dépôt international: PCT/FR2017/050767
(87) Numéro de publication internationale: WO 2017/174908

(56) Documents cités:
- WO-A2-2008/064014
- US-A- 4 087 391
- US-A1- 2002 045 085

## Description

### DOMAINE DE L'INVENTION

L'invention concerne un procédé d'obtention d'un film ou article filmogène, ledit procédé étant défini dans la revendication 1.

### ARRIERE-PLAN TECHNIQUE

Les films polymères ou fibres creuses de polymère peuvent être utilisés dans diverses applications, telles que le revêtement des textiles, notamment cuirs artificiels, daim des chaussures ou équipements de protection individuel ; les batteries, notamment batteries Li-ion ; les membranes, notamment pour le traitement de l'eau ou la dialyse ; les protections de câbles électriques par gainage ; les circuits électroniques et plus généralement toutes applications où des films polymères sont requis.

Parmi les polymères qui peuvent être utilisés dans ces applications, on peut citer les polyuréthanes (PU), polysulfones (PSU), polyfluorures de vinylidène (PVDF), polyéthersulfones (PES), polyphénylsulfones (PPSU) l'acétate de cellulose, les polyamide-imides (PAI) ou les polyimides (PI), cette liste n'étant pas limitative.

Actuellement, les solvants couramment utilisés pour la fabrication de ces films ou fibres creuses de polymère sont des solvants aprotiques polaires, tels que la NMP (N-méthyl-pyrrolidone), la DMF (diméthylformamide), la NEP (N-éthyl-pyrrolidone) et la DMAc (diméthylacétamide). Ces solvants présentent néanmoins de nombreux inconvénients toxicologiques car ils sont classés CMR (cancérigène-mutagène-reprotoxique) et toxique.

Il existe donc un intérêt à substituer ces solvants par des solvants présentant un meilleur profil toxicologique.

Il a également été proposé d'utiliser le diméthylsulfoxyde (DMSO) comme solvant pour la fabrication de films ou fibres creuses de polymères.

L'utilisation de DMSO peut cependant dans certains cas présenter certains problèmes, tels que :
- Coloration des formulations et/ou films fins obtenus lorsque le DMSO est utilisé, ce qui crée des problèmes de qualité pour l'utilisation des films ;
- Augmentation de la viscosité de certaines solutions à base de DMSO par rapport à d'autres solvants, ce qui peut créer des problèmes économiques pour la réalisation des films ;
- Corrosion de la métallurgie lors de l'évaporation du DMSO et éventuellement d'eau ce qui crée des problèmes économiques.
- Mauvaises odeurs des effluents aqueux qui sont envoyés en stations d'épuration des eaux usées ce qui crée des problèmes environnementaux.

Les procédés de l'art antérieur mettant en oeuvre des solutions de polymères ne permettent pas d'obtenir de films fins au niveau industriel, c'est-à-dire des films de bonne qualité obtenus par des procédés viables aussi bien d'un point de vue économique, d'un point de vue toxicologique que d'un point de vue de leur impact sur l'environnement.

Ainsi, la présente invention propose un procédé qui permet de surmonter les inconvénients précités.

US 2002/0045085 décrit des membranes électrolytiques à base de polymères er leur procédé de fabrication. Un pH supérieur à 6 dans la préparation de membranes électrolytiques à base de polymères n'est pas divulgué dans US 2002/0045085, ni dans US 4 087 391, ni dans WO 2008/064014..

### RESUME DE L'INVENTION

L'invention concerne en premier lieu un procédé d'obtention d'un film ou article filmogène, ledit procédé étant défini dans la revendication 1.

De préférence, la teneur en eau du système solvant est inférieure ou égale à 900 ppm en poids, de préférence inférieure ou égale à 500 ppm en poids, de préférence encore inférieure ou égale à 300 ppm en poids, plus préférentiellement encore inférieure ou égale à 100 ppm en poids, voire inférieure ou égale à 50 ppm en poids.

De préférence, le système solvant présente un pH allant de 6 à 14, de préférence de 6 à 10, de préférence encore de 6,5 à 8.

Selon un mode de réalisation de l'invention, le système solvant comprend de 5 à 100% en poids, de préférence de 25 à 100% en poids, de préférence encore de 50 à 100% en poids, plus préférentiellement de 65 à 100% en poids, plus préférentiellement encore de 75 à 100% en poids de molécules portant au moins une fonction sulfoxyde, par rapport au poids total du système solvant.

De préférence, les molécules portant au moins une fonction sulfoxyde répondent à la formule (1) : 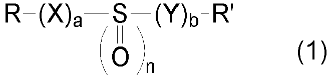 dans laquelle :
- X et Y, identiques ou différents, sont choisis, indépendamment l'un de l'autre, parmi oxygène, soufre, SO, SO₂, NH, et NR" ;
- a et b, identiques ou différents, représentent, indépendamment l'un de l'autre, 0 ou 1 ; n est égal à 1 ou 2 ;
- R, R' et R", identiques ou différents, sont choisis, indépendamment les uns des autres, parmi un radical alkyle, linéaire ou ramifié, contenant de 1 à 12 atomes de carbone, un radical alcényle, linéaire ou ramifié, contenant de 2 à 12 atomes de carbone, et un radical aryle contenant de 6 à 10 atomes de carbone; R, R' et R" pouvant éventuellement être substitués par des radicaux choisis parmi alkyle, alcényle, aryle et halogène, et pouvant éventuellement contenir un ou plusieurs hétéroatomes choisis parmi O, S, N, P et Si ; R et R' pouvant en outre former ensemble et avec les atomes qui les portent, une structure cyclique hydrocarbonée et contenant éventuellement un ou plusieurs hétéroatomes choisis parmi O, S et N, ladite structure cyclique comportant au total 5, 6, 7, 8 ou 9 sommets.

De préférence encore, les molécules portant au moins une fonction sulfoxyde répondent à la formule (1a) : 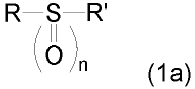 dans laquelle :
R et R', identiques ou différents, sont choisis parmi un radical alkyle, linéaire ou ramifié, contenant de 1 à 4 atomes de carbone, un radical alcényle, linéaire ou ramifié, contenant de 1 à 4 atomes de carbone, et un radical phényle; et
n est égal à 1 ou 2, de préférence égal à 2.

Avantageusement, les molécules portant au moins une fonction sulfoxyde sont des molécules de diméthylsulfoxyde.

Selon un mode de réalisation de l'invention, la solution de polymère(s) comprend de 5 à 30% en poids de polymères, par rapport au poids total de la solution de polymère(s).

Selon un mode de réalisation de l'invention, les polymères sont choisis parmi les polyuréthanes, polysulfones, polyfluorures de vinylidène, polyéthersulfones, polyphénylsulfones, l'acétate de cellulose, les polyamides, les polyacryliques, les poly-époxy, les polyméthacrylates, les polycarbonates, les silicones, les polymères de vinyle, les polyamide-imides ou les polyimides.

Selon un mode de réalisation de l'invention, la solution de polymère(s) est obtenue par dissolution des polymères dans le système solvant de l'étape a) à une température allant de 10°C à 120°C, de préférence allant de 20°C à 100°C, de préférence encore allant de 50°C à 70°C.

De préférence, le milieu non-solvant des polymères et solvant du système solvant comprend au moins 20% en poids d'eau, de préférence au moins 40% en poids d'eau, de préférence encore au moins 60% en poids d'eau, encore plus préférentiellement au moins 65% en poids d'eau, idéalement au moins 75% en poids d'eau, par rapport au poids total du milieu non-solvant des polymères et solvant du système solvant.

Selon un mode de réalisation de l'invention, le procédé comprend en outre une étape d) de traitement de l'effluent de solvant obtenu à l'issue de l'étape c).

De préférence, l'étape de traitement d) comprend une étape préliminaire d1) de séparation, de préférence par distillation, recristallisation, traitement membranaire, l'effluent de solvant permettant de récupérer les molécules portant au moins une fonction sulfoxyde telles que le diméthylsulfoxyde d'une part et l'effluent aqueux d'autre part de l'effluent de solvant.

Selon un mode de réalisation de l'invention, l'étape de traitement d) comprend une oxydation, chimique, biologique et/ou thermique, qui est effectuée soit directement sur l'effluent de solvant issu de l'étape c) soit sur l'effluent aqueux issu de l'étape préliminaire d1).

Selon un mode de réalisation de l'invention, l'étape de traitement d) est effectuée sur un site de mise en oeuvre des étapes a) à c) du procédé selon l'invention.

Selon un autre mode de réalisation de l'invention, l'étape de traitement d) est effectuée sur un site différent d'un site de mise en oeuvre des étapes a) à c), par exemple sur un site dédié aux traitements des effluents.

Selon un autre mode de réalisation de l'invention, le film ou l'article filmogène est un film plat.

Selon un autre mode de réalisation de l'invention, le film ou l'article filmogène est une fibre creuse.

Le procédé selon la présente invention permet d'obtenir un film ou article filmogène présentant une très bonne tenue mécanique ainsi qu'une très bonne homogénéité (sans imperfections).

Le procédé selon l'invention permet de limiter l'émanation de mauvaises odeurs et permet de limiter les problèmes de corrosion de l'unité industrielle.

Le ou les solvant(s) utilisés ne sont pas ou peu toxiques. En particulier, les solvant(s) utilisés ne sont pas classés CMR (Cancérogène-Mutagène-Reprotoxique).

### DESCRIPTION DE MODES DE REALISATION DE L'INVENTION

L'invention est maintenant décrite plus en détail et de façon non limitative dans la description qui suit.

La présente invention propose un procédé d'obtention d'un film ou article filmogène, ledit procédé étant défini dans la revendication 1.

Sauf indication contraire, « ppm » signifie « parties par million », et est exprimé en poids dans le cadre de la présente invention.

Au sens de la présente invention, on entend par « film ou article filmogène », un produit de faible épaisseur ayant par exemple une épaisseur inférieure à 1000 µm, de préférence inférieure à 800 µm, de préférence encore inférieure à 500 µm, de manière tout à fait préférée inférieure à 200 µm. De préférence, le film ou article filmogène est homogène, c'est-à-dire sans imperfections ou craquelures.

Le film ou article filmogène peut être façonné de façon à pouvoir être utilisé dans différentes applications, telles que le revêtement des textiles, notamment cuirs artificiels, daim des chaussures ou équipements de protection individuel ; les batteries, notamment batteries Li-ion ; les membranes, notamment pour le traitement de l'eau ou la dialyse ; les protections de câbles électriques par gainage ou les circuits électroniques.

Le film ou article filmogène est avantageusement un film plat ou une fibre creuse.

Le système solvant de l'étape a) selon la présente invention comprend au moins une molécule portant au moins une fonction sulfoxyde, de préférence lesdites molécules portant une fonction sulfoxyde représentent de 5% à 100% en poids, de préférence de 25% à 100% en poids, de préférence encore de 50% à 100% en poids, plus préférentiellement de 65% à 100% en poids, avantageusement de 75% à 100% en poids, par rapport au poids total du système solvant.

Selon un mode de réalisation préféré, la molécule portant au moins une fonction sulfoxyde est un oxyde de sulfure organique représenté par la formule générale (1) : 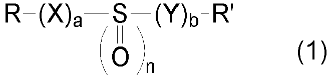 dans laquelle :
- X et Y, identiques ou différents, sont choisis, indépendamment l'un de l'autre, parmi oxygène, soufre, SO, SO₂, NH, et NR" ;
- a et b, identiques ou différents, représentent, indépendamment l'un de l'autre, 0 ou 1 ; n est égal à 1 ou 2 ;
- R, R' et R", identiques ou différents, sont choisis, indépendamment les uns des autres, parmi un radical alkyle, linéaire ou ramifié, contenant de 1 à 12 atomes de carbone, un radical alcényle, linéaire ou ramifié, contenant de 2 à 12 atomes de carbone, et un radical aryle contenant de 6 à 10 atomes de carbone; R, R' et R" pouvant éventuellement être substitués par des radicaux choisis parmi alkyle, alcényle, aryle, halogène, et pouvant éventuellement contenir un ou plusieurs hétéroatomes choisis parmi O, S, N, P et Si ; R et R' pouvant en outre former ensemble et avec les atomes qui les portent, une structure cyclique hydrocarbonée et contenant éventuellement un ou plusieurs hétéroatomes choisis parmi O, S et N, ladite structure cyclique comportant au total 5, 6, 7, 8 ou 9 sommets.

Selon un aspect préféré de la présente invention, le composé répond à la formule (1) dans laquelle a est 0 et (Y)_{b} représente (S)ₓ , où x représente 0 ou 1, de préférence 0.

On préfère également les composés de formule (1) pour lesquels les radicaux R et R' sont identiques et sont choisis parmi un radical alkyle linéaire ou ramifié comportant de 1 à 12 atomes de carbone, de préférence de 1 à 6 atomes de carbone, de préférence encore de 1 à 4 atomes de carbone, un radical alcényle linéaire ou ramifié comportant de 2 à 12 atomes de carbone, de préférence de 2 à 6 atomes de carbone, de préférence encore de 2 à 4 atomes de carbone, et un radical aryle, de préférence phényle.

Selon un mode de réalisation préféré, la molécule portant au moins une fonction sulfoxyde de la présente invention répond à la formule (1') : 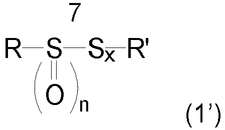 dans laquelle :
R est choisi parmi un radical alkyle, linéaire ou ramifié, contenant de 1 à 4 atomes de carbone, un radical alcényle, linéaire ou ramifié, contenant de 2 à 4 atomes de carbone, et un radical aryle, de préférence phényle,
n est égal à 1 ou 2 ;
x représente 0 ou 1 ;
R' est choisi parmi un radical alkyle, linéaire ou ramifié, contenant de 1 à 4 atomes de carbone, un radical alcénylène, linéaire ou ramifié, contenant de 2 à 4 atomes de carbone, et un radical aryle, de préférence phényle.

Selon un mode de réalisation particulièrement préféré, la molécule portant au moins une fonction sulfoxyde selon la présente invention répond à la formule (1a) : 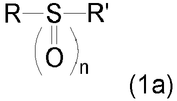 dans laquelle :
R et R', identiques ou différents, sont choisis parmi un radical alkyle, linéaire ou ramifié, contenant de 1 à 4 atomes de carbone, un radical alcényle, linéaire ou ramifié, contenant de 1 à 4 atomes de carbone, et un radical phényle; et
n est égal à 1 ou 2, de préférence n = 2.

La molécule portant la fonction sulfoxyde peut par exemple comprendre de 2 à 24 atomes de carbone, de préférence de 2 à 12 atomes de carbone, de préférence encore de 2 à 6 atomes de carbone.

De préférence, la ou les molécules présentant au moins une fonction sulfoxyde présentent une seule fonction sulfoxyde.

De préférence, la molécule portant au moins une fonction sulfoxyde est le diméthylsulfoxyde (DMSO).

Selon un mode de réalisation, l'oxyde de soufre utilisé dans la présente invention est un oxyde de sulfure organique, obtenu selon tout procédé connu en soi, ou encore disponible dans le commerce, et de préférence à teneur réduite en impuretés volatiles, en particulier à des teneurs inférieures à 1000 ppm massiques, de préférence inférieures à 500 ppm massiques, de préférence encore inférieures à 100 ppm massiques. De telles impuretés sont par exemple, et notamment lorsque le composé est le DMSO, le sulfure de diméthyle (DMS), le diméthyldisulfure (DMDS) et/ou le bis(méthylthio)méthane, également connu sous le nom de 2,4-dithiapentane (BMTM). Dans un mode de réalisation particulièrement préféré, le DMSO est le DMSO odorisé commercialisé par la société Arkema, et notamment sous le nom de marque DMSO Evol^{™}.

Ainsi, selon un mode de réalisation préféré, le système solvant de l'étape a) comprend du DMSO, de préférence le DMSO représente de 5% à 100% en poids, de préférence de 25% à 100% en poids, de préférence encore de 50% à 100% en poids, plus préférentiellement de 65% à 100% en poids, avantageusement de 75% à 100% en poids, par rapport au poids total du système solvant.

Selon un mode de réalisation préféré de l'invention, le système solvant de l'étape a) est exempt de composés classés CMR.

Le système solvant de l'étape a) présente une teneur en eau inférieure strictement à 1000 ppm en poids, de préférence inférieure ou égale à 900 ppm en poids, de préférence inférieure ou égale à 500 ppm en poids, de préférence encore inférieure ou égale à 300 ppm en poids, plus préférentiellement encore inférieure ou égale à 100 ppm en poids, voire encore inférieure ou égale à 50 ppm en poids.

La teneur en eau du système solvant peut être déterminée par la méthode coulométrique de Karl-Fisher.

Par exemple, dans les solvants DMSO disponibles commercialement, les solvants peuvent contenir des quantités d'eau supérieures ou égales à 1000 ppm.

Ainsi, selon la teneur en eau du système solvant de l'étape a), il est possible de prévoir une étape de séchage du système solvant selon des méthodes bien connues de l'homme du métier, par exemple par séchage sur tamis moléculaire ou zéolithe ou par distillation.

Si le système solvant, comprenant par exemple du DMSO, est trop humide (teneur en eau supérieure ou égale à 1000 ppm en poids, voire supérieure strictement à 900 ppm en poids), alors la capacité de dissolution du polymère est diminuée, de même que la stabilité de la solution polymère. De plus, l'utilisation d'une solution polymère contenant une quantité d'eau encore plus importante conduit souvent à un film ayant de nombreuses imperfections, ce qui peut se traduire par une mauvaise tenue mécanique des films ou une mauvaise homogénéité.

Le système solvant selon la présente invention peut être constitué uniquement de molécules portant au moins une fonction sulfoxyde, telles que des molécules de DMSO, ou peut comprendre en outre un ou plusieurs autres solvants (différents des molécules portant une fonction sulfoxyde, en particulier différents des molécules répondant à la formule (1) définie ci-dessus) et/ou un ou plusieurs autres additifs fonctionnels.

Parmi les autres solvants (solvants ne portant pas de fonction(s) sulfoxyde) pouvant être utilisés dans le système solvant, on peut citer :
- les cétones, telles que l'acétone, la méthyléthylcétone (MEK), la méthylisobutylcétone, l'hexanone, la cyclohexanone, l'éthylaminecétone, l'isophorone, la triméthylcyclohexanone, la gamma butyrolactone, l'alcool diacétone ;
- les amines, telles que la monoéthanolamine (MEoA), la diéthanolamine (DEoA), la propanolamine (PoA), la butyl-*iso*-propanol-amine (BiPoA), l'*iso-*propanolamine (iPoA), la 2-[2-(3-amino-propoxy)éthoxy]éthanol, la N-2-hydroxyéthyldiéthylènetriamine, la (3-méthoxy)-propylamine (MoPA), la 3-isopropoxypropylamine (IPOPA), la monoéthylamine, la diéthylamine, la diéthylaminopropylamine (DEAPA), la triéthylamine (TEA), l'acetonitrile ;
- les alcools, tels que l'éthanol, le méthanol, le propanol, l'isopropanol, le glycerol, l'alcool diacétone, le butanol, le méthylisobutylcarbinol, l'hexylèneglycol, l'alcool benzylique ;
- les éthers, tels que le tétrahydrofurane (THF), le méthyl furane, le méthyl tétrahydrofurane, le tétrahydropyrane, le glycoldialkyléther ;
- les esters, tels que les esters dibasiques, le diméthylglutarate, le diméthylsuccinate, le diméthyladipate, le butylacétate, l'éthylacétate, le diéthylcarbonate, le diméthylcarbonate, le propylène carbonate, l'éthylméthylcarbonate, le glycérolcarbonate, le diméthyl-2-méthylglutarate, le diméthyl-2-méthyladipate, le diméthyl-2-méthylsuccinate, le N-butylpropionate, le Benzyl acétate, l'éthyléthoxypropionate ;
- les sulfones, tels que le diméthylsulfone, le sulfolane;
- les aromatiques, tels que le toluène, le xylène ;
- les acétals, tels que le méthylal, l'éthylal, le butylal, le dioxolane, le TOU (tétraoxaundécane) ;
- Les éthers de glycol de type E ou P, tels que le dipropylène glycol diméthyl éther (DPGDME), le dipropylène glycol méthyl éther.

À titre d'exemples d'autres solvants, on peut également citer les solvants suivants : N-butylpyrrolidone, N-isobutylpyrrolidone, N-*tert*-butylpyrrolidone, N-n-pentylpyrrolidone, N-(méthyl-substitué butyl)pyrrolidone, N-propyl- ou N-butyl pyrrolidone dont le noyau est méthyl-substitué ou la N-(methoxypropyl)-pyrrolidone, polyglyme, éthyl diglyme, 1,3-dioxolane, méthyl-5-(diméthylamino)-2-méthyl-5-oxopentanoate.

Parmi les additifs fonctionnels qui peuvent être utilisés dans le système solvant, on peut citer :
- les colorants,
- les agents porogènes, tel qu'un polyéthylène glycol (PEG) ou un polyvinylpyrrolidone (PVP),
- les conservateurs,
- les antioxydants.

Les additifs fonctionnels, lorsqu'ils sont présents, peuvent représenter de 0,01 à 10% en poids, ou encore de 0,05 à 5% en poids, voire de 0,1 à 3% en poids, par rapport au poids total du système solvant.

Le système solvant utilisé dans le procédé selon l'invention présente un pH supérieur ou égal à 6, de préférence allant de 6 à 14, de préférence encore allant de 6 à 10, plus préférentiellement encore allant de 6,5 à 8.

Au sens de la présente invention, le pH est mesuré à l'aide d'un pH-mètre en mesurant le pH à 20°C d'une solution contenant 25% en poids du système solvant et 75% en poids d'eau distillée.

Afin d'augmenter le pH du système solvant, il est possible d'ajouter des composés basiques, généralement en une proportion inférieure ou égale à 10% en poids, idéalement inférieure ou égale à 5%en poids, voire inférieure ou égale à 5000ppm poids, voire inférieure ou égale à 500ppm poids, par rapport au poids total du système solvant. Les composés basiques ainsi utilisés peuvent être de tout type connu de l'homme du métier. On citera à titre d'exemples les amines telles que la monoéthanolamine, la N,N-diéthylhydroxylamine (DEHA), la N,N-diéthyl phénylacétamide (DEPA). D'autres exemples comprennent les carbonates, tels que le carbonate de sodium et le carbonate de potassium. Lesdits composés basiques peuvent être initialement présents dans le système solvant ou peuvent être ajoutés lors du procédé d'obtention du film ou article filmogène à base de polymère selon l'invention. Le pH du système solvant peut aussi être augmenté par passage du système solvant sur résine basique.

Lorsque le système solvant est trop acide (pH inférieur à 6), alors il peut y avoir générations de mauvaises odeurs ou une coloration du système solvant, ce qui est particulièrement gênant pour l'obtention d'un film ou article filmogène. En outre, l'utilisation d'un système solvant ayant un pH inférieur à 6 peut générer des problèmes de corrosion sur le dispositif industriel de réalisation des films ou articles filmogènes, ladite corrosion pouvant se former par exemple dans les fours d'évaporation, dans les bains de coagulation/inversion de phase, etc.

Lors de l'étape b) du procédé selon l'invention, une solution de polymères est préparée.

Par « polymères », au sens de la présente invention, on entend toutes molécules présentant au moins deux motifs (monomères) identiques reliés par une liaison covalente. Le polymère selon la présente invention peut être d'origine naturelle ou synthétique, pouvant être obtenu par polymérisation, polycondensation ou polyaddition.

Dans le cadre de la présente invention, tous types de polymères tels que définis ci-dessus peuvent-être utilisés, dans toutes les plages de poids moléculaires connues de l'homme du métier, par exemple des masses moléculaires allant de 5000 à 10000000 g/mol.

Selon un mode de réalisation, le polymère est choisi parmi les polyuréthanes (PU), polysulfones (PSU), polyfluorures de vinylidène (PVDF), polyéthersulfones (PES), polyphénylsulfones (PPSU) l'acétate de cellulose, les polyamides, les polyacryliques, les poly-époxy, les polyméthacrylates, les polycarbonates, les silicones, les polymères de vinyle, les polyamide-imides (PAI) ou les polyimides (PI).

Par « polysulfone », au sens de la présente invention, on entend un polymère présentant au moins deux motifs (n≥2) de formule :

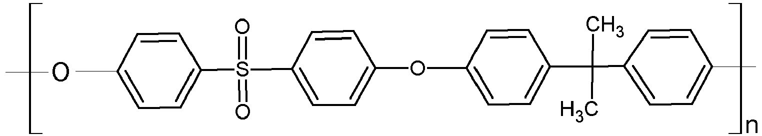

Par « polyéthersulfone », au sens de la présente invention, on entend un polymère présentant au moins deux motifs (n≥2) de formule :

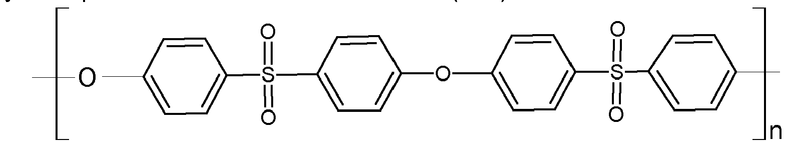

Par « polyphénylsulfone », au sens de la présente invention, on entend un polymère présentant au moins deux motifs (n≥2) de formule :

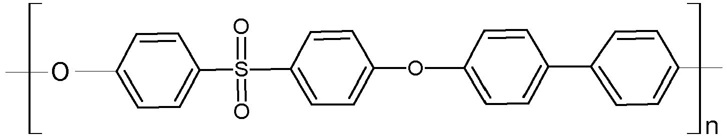

La solution de polymères peut être obtenue soit par dissolution d'un polymère préalablement préparé, dans le système solvant de l'étape a) (variante b1) soit par synthèse du polymère directement dans le système solvant de l'étape a) (variante b2).

Selon la variante b1), la dissolution du polymère dans le système solvant de l'étape a) est effectuée selon tout moyen connu de l'homme du métier. La dissolution du polymère peut être effectuée à toute température et est généralement effectuée à une température allant de la température ambiante à la température d'ébullition du système solvant. Par exemple, la dissolution du polymère peut être effectuée à une température allant de 10°C à 120°C, de préférence de 20°C à 100°C, de préférence encore allant de 50°C à 70°C.

Pour faciliter la dissolution, on peut prévoir un système d'agitation, bien connu de l'homme du métier.

Le polymère à dissoudre dans le système solvant peut se trouver sous différentes formes, telles que par exemple sous forme de poudre, d'extrudés, de granulés, de billes, d'écailles, etc.

Selon la variante b2), le polymère est directement synthétisé dans le système solvant de l'étape a). La synthèse du polymère peut être effectuée selon tout moyen connu de l'homme du métier. Par exemple, les polymérisations anioniques catalysées par des bases peuvent être réalisées dans le système solvant de l'étape a). De même, l'utilisation du système solvant de l'étape a) permet de réaliser des polymérisations radicalaires en phase homogène. Ces polymérisations radicalaires présentent notamment l'avantage d'être mieux contrôlables.

À l'issue de l'étape b), une solution de polymère(s) est obtenue. Cette solution de polymère(s) contient moins de 1% d'eau, de préférence encore moins de 0,5%, et de manière tout à fait préférée, moins de 0,1% en poids d'eau par rapport au poids total de la solution de polymère(s). Ladite solution de polymère présente un pH strictement supérieur à 6. La solution de polymère(s) comprend de 1 à 50% en poids, de préférence de 2 à 40% en poids, de préférence encore de 5 à 30% en poids de polymère(s), par rapport au poids total de la solution de polymère(s).

À cette solution de polymère(s) peuvent être ajoutés un ou plusieurs additifs, par exemple de type charges et autres, bien connus de l'homme du métier, et par exemple, et de manière non limitative, un ou plusieurs additifs choisis parmi pigments, colorants, agents porogènes, agents ignifugeants, protecteurs U.V., et autres.

Lors de l'étape c), le système solvant est éliminé, ce qui permet d'obtenir le film ou l'article filmogène souhaité.

L'élimination du système solvant lors de l'étape c) est effectuée par coagulation du polymère dans un milieu non-solvant dudit polymère mais solvant du système solvant (« wet process » en anglais).

Selon la forme souhaitée du film ou de l'article filmogène, l'homme du métier choisira le procédé adapté de mise en place de la solution de polymère(s) avant élimination du système solvant lors de l'étape c). Par exemple, dans le cas de films plats, la mise en place du/des polymères est effectuée avant élimination du système solvant, alors que dans le cas de fibres creuses, la mise en place du/des polymères est effectuée en même temps que l'élimination du solvant.

Cette phase de mise en place de la solution de polymère(s) peut éventuellement être réalisée sous atmosphère à humidité réduite, de préférence à un taux relatif d'humidité strictement inférieur à 80%, encore de préférence strictement inférieur à 60%, et encore de préférence strictement inférieur à 40%. Cette atmosphère à humidité réduite peut être obtenue par n'importe quel moyen connu de l'homme du métier par exemple par ajout d'un gaz séché sur tamis moléculaire.

Le film ou l'article filmogène peut être obtenu tel quel ou encore revêtu, par un procédé de revêtement sur un support, ou encore par un procédé de filage de la solution de polymères suivi d'une trempe dans un milieu non-solvant dudit polymère (dans un bain de coagulation par exemple) permettant de précipiter le polymère et de faire migrer le solvant de la solution de polymères vers le milieu non-solvant dudit polymère (coagulation: wet process). Le support de revêtement peut être de tout type, en particulier le support peut être poreux ou non poreux.

Parmi les supports non poreux, on peut citer le verre, le métal, les plastiques.

Parmi les supports poreux, on peut citer les fibres végétales, les fibres minérales, les fibres organiques, les textiles tissés ou non-tissés, le papier, le carton, et autres. Dans le cas de supports poreux, on parle également de procédé par imprégnation.

Le bain de coagulation est constitué d'un milieu non-solvant du polymère, ledit milieu non-solvant du polymère est de préférence bon solvant du système solvant dudit polymère.

Par « bon solvant du système solvant dudit polymère », on entend au sens de la présente invention que le système solvant est soluble dans le milieu non solvant du polymère lorsqu'au moins 30 g, de préférence 50 g, de préférence encore 100 g de système solvant sont dissous dans 1000 g de non solvant du polymère à 20°C et à pression atmosphérique, c'est-à-dire qu'une solution homogène (c'est-à-dire une seule phase liquide) est obtenue après 30 mn d'agitation.

Par « non solvant dudit polymère », on entend au sens de la présente invention que le polymère n'est pas soluble dans ledit non solvant à plus de 100 g pour 1000 g de non solvant, de préférence à plus de 10 g pour 1000 g de non solvant, encore de préférence à plus de 1 g pour 1000 g de non solvant à 20°C et à pression atmosphérique, c'est-à-dire qu'une solution hétérogène (au minimum deux phases) est observée même après 30 mn d'agitation.

Le milieu non-solvant du polymère peut comprendre en outre un ou plusieurs additifs fonctionnels tels que des colorants, des agents odorants, des conservateurs, ou des antioxydants. Selon ce mode de réalisation, le ou les additifs fonctionnels sont de préférence présents à des teneurs inférieures ou égales à 5% en poids, de préférence à des teneurs allant de 0,01 à 3% en poids, de préférence encore allant de 0,05 à 2% en poids, par rapport au poids total du milieu non-solvant du polymère.

Le bain de coagulation constitué du milieu non-solvant du polymère peut comprendre jusqu'à 80% en poids, de préférence jusqu'à 60% en poids, de préférence encore jusqu'à 40% en poids, d'un solvant du polymère, par rapport au poids total du bain de coagulation. Par exemple, le bain de coagulation constitué du milieu non-solvant du polymère peut comprendre jusqu'à 80% en poids du système solvant dudit polymère, tel que défini au sens de la présente invention.

Selon un mode de réalisation du procédé selon l'invention, la solution de polymères obtenue à l'étape b) est immergée dans le bain de coagulation pendant une durée pouvant varier de quelques secondes à quelques dizaines de minutes, par exemple de 1 secondes à 60 minutes, durée après laquelle le polymère précipite et le système solvant dudit polymère migre dans le non-solvant dudit polymère.

De manière générale, dans le cas où l'eau est le milieu non solvant du polymère, la concentration en eau dans le bain de coagulation peut être supérieure ou égale à 20% en poids, de préférence supérieure ou égale à 40% poids, de préférence encore supérieure ou égale à 60% en poids.

La concentration en eau dans le bain de coagulation peut varier dans de grandes proportions. On peut envisager un bain de coagulation composé essentiellement (ou uniquement) d'eau (peut-être quelques traces de molécules portant au moins une fonction sulfoxyde, telles que de DMSO, par exemple inférieures à 1000 ppm) et que ledit bain se charge petit à petit en molécules portant au moins une fonction sulfoxyde (telles que des molécules de DMSO) au fur et à mesure de l'immersion de la solution de polymères dans l'eau.

On peut également envisager un bain de coagulation dans lequel le ratio eau/molécules portant au moins une fonction sulfoxyde (telles que DMSO) est maintenu dans une gamme allant de 80/20 à 50/50 en poids, de préférence allant de 65/35 à 55/45.

Il est également possible d'envisager plusieurs bains de coagulation placés en série ou en parallèle, avec des ratios eau/molécules portant une fonction sulfoxyde (telles que DMSO) identiques ou différents.

La précipitation dans le bain de coagulation peut être réalisée à toute température et de préférence à une température allant de 15°C à 60°C, de préférence à température ambiante. Dans certains cas, il peut être avantageux de refroidir le bain de coagulation, afin d'améliorer la vitesse et le rendement de précipitation.

La précipitation est généralement réalisée à pression atmosphérique.

Il peut être avantageux de diminuer la présence de solvant en phase gaz lors de l'opération de précipitation au-dessus du bain de coagulation. Afin de diminuer la présence de solvant en phase gaz, il peut être envisagé de couvrir le bain de coagulation et/ou d'aspirer efficacement les gaz ou encore empêcher la présence de solvant en phase gaz en recouvrant la surface du bain d'un système anti-évaporation, par exemple avec des éléments flottants, tels que des billes de liège, polypropylène ou polyéthylène, et autres.

Le polymère précipité obtenu à l'issu de l'étape c1) peut être sous forme de film (« film casting » en langue anglaise) éventuellement déposé et/ou imprégné sur un support (selon la porosité du support) ou encore sous forme de fibres creuses ou non. Il est ainsi récupéré, éventuellement après un ou plusieurs lavages, puis séchage.

Des supports non poreux seront revêtus du film de polymère(s) alors que des supports poreux pourront être imprégnés de la solution de polymère(s).

Pour l'obtention de polymères sous forme de fibres creuses, il sera avantageux d'éliminer le système solvant selon la variante c1) (« wet process » en anglais).

Les eaux de lavage peuvent être réunies avec le bain de coagulation pour être éventuellement traitées dans une étape ultérieure d).

Selon une variante qui n'est pas revendiquée (variante c2), le système solvant est éliminé par évaporation du solvant (« dry process » en anglais). Lors de l'évaporation du solvant, le polymère peut alors précipiter. L'évaporation du solvant peut être effectuée selon des méthodes connues de l'homme du métier, parmi lesquelles on peut citer le chauffage, la circulation d'un courant de gaz inerte ou non, la mise sous dépression.

Selon un mode de réalisation de la variante c2), le film ou l'article filmogène peut être obtenu par dépôt sur un support de revêtement de la solution de polymères suivi d'une évaporation du solvant. Le support de revêtement peut être de tout type, en particulier le support peut être poreux ou non poreux. Parmi les supports non poreux, on peut citer le verre, le métal, les plastiques. Parmi les supports poreux, on peut citer les fibres végétales, les fibres minérales, les fibres organiques, les textiles tissés ou non-tissés, le papier, le carton, et autres.

Selon un mode de réalisation de la variante c2), l'évaporation du solvant de la solution de polymères obtenue à l'issue de l'étape b) est effectuée par chauffage, de préférence à une température allant de 30°C à 200°C, de préférence encore allant de 60°C à 150°C, plus préférentiellement allant de 80°C à 120°C.

Selon un mode de réalisation de la variante c2), l'évaporation du solvant de la solution de polymères obtenue à l'issue de l'étape b) est effectuée sous courant de gaz, ledit gaz étant de préférence choisi parmi l'air, l'azote, l'oxygène, la vapeur d'eau, etc.

Selon un mode de réalisation de la variante c2), l'évaporation du solvant de la solution de polymères obtenue à l'issue de l'étape b) est effectuée par une mise sous dépression, par exemple à une pression allant de 5 kPa à 100 kPa.

Il est possible de combiner plusieurs des méthodes d'évaporation décrites ci-dessus.

Ainsi, selon un mode de réalisation préféré, l'évaporation du solvant est réalisée à une température d'environ 150°C à pression atmosphérique, sous courant d'air.

Selon un autre mode de réalisation, l'évaporation du solvant est réalisée à une température d'environ 120°C sous pression réduite de 10 kPa.

Selon encore un autre mode de réalisation, l'évaporation du solvant est réalisée à une température d'environ 150°C, à pression atmosphérique, sous courant de vapeur d'eau, qui favorise l'élimination du DMSO ou autres molécules portant une fonction sulfoxyde en raison de sa grande affinité avec l'eau.

Il peut également être envisagé, à l'issue de l'étape d'élimination du solvant comme décrit ci-dessus, de procéder à un ou plusieurs lavage(s) à l'eau (par aspersion, immersion, ou autre) du polymère précipité obtenu, ceci afin d'éliminer les traces résiduelles éventuelles de DMSO ou autre(s) molécule(s) portant une fonction sulfoxyde. Les traces résiduelles éventuelles de DMSO, ou autre(s) molécule(s) portant une fonction sulfoxyde résiduel peuvent ainsi être réduites dans une proportion allant de 0 à 10000 ppm et préférentiellement de 0 à 1000 ppm. De manière similaire, les traces de solvant(s) résiduel(s) sont de préférence réduites dans une proportion allant de 0 à 10000 ppm et préférentiellement de 0 à 1000 ppm.

Le polymère précipité obtenu à l'issue de l'étape c2) peut être obtenu sous forme de film (« film casting » en langue anglaise) éventuellement déposé et/ou imprégné sur un support (selon la porosité du support) ou encore sous forme de fibres creuses ou non. De manière préférée, le polymère précipité obtenu à l'issue de l'étape c2) peut être obtenu sous forme de film (« film casting » en langue anglaise) déposé sur un support non poreux.

Le solvant évaporé peut avantageusement être à nouveau condensé et récupéré pour réutilisation éventuelle. Le solvant évaporé sous forme gazeuse peut être abattu à l'eau ('*scrubber'* en anglais) selon des méthodes connues de l'homme du métier. Dans ce cas les eaux d'abatage contenant le solvant peuvent être traitées par exemple selon une méthode de traitement telle que décrite ci-dessous (étape d) du procédé selon l'invention.

Selon un mode de réalisation, le procédé selon l'invention comprend en outre une étape d) de traitement des effluents issus de l'étape c).

Les effluents issus de l'étape c) comprennent généralement de l'eau et le système solvant, de préférence les effluents issus de l'étape c) comprennent de l'eau et du DMSO, de préférence encore les effluents issus de l'étape c) sont essentiellement constitués d'eau et de molécules portant une fonction sulfoxyde telles que du DMSO.

Généralement, lorsque les effluents issues de l'étape c) comprennent plus de 15% en poids de molécules portant une fonction sulfoxyde telles que du DMSO, par rapport au poids total des effluents, l'étape d) comprend une étape préliminaire d1) de séparation permettant de traiter les effluents aqueux comprenant des molécules portant au moins une fonction sulfoxyde telles que du DMSO et de récupérer la majorité des molécules portant au moins une fonction sulfoxyde telles que du DMSO d'une part, et une phase aqueuse d'autre part qui peut être traitée dans l'étape d2) décrite ci-après.

Ladite étape de séparation d1) peut être effectuée selon toute méthode connue de l'homme du métier, parmi lesquelles on peut citer la distillation, la recristallisation, le traitement membranaire.

L'étape d) de traitement des effluents issus de l'étape c) comprend généralement une étape d2) de traitement des eaux usées directement issues de l'étape c) ou issues de l'étape d1) décrite ci-dessus.

Généralement, lorsque les effluents issues de l'étape c) comprennent moins de 15% en poids de molécules portant au moins une fonction sulfoxyde telles que du DMSO, par rapport au poids total des effluents, l'étape d) ne comprend pas l'étape préliminaire d1) et les effluents sont directement traités par l'étape de traitement d2).

L'unité de traitement permettant de mettre en oeuvre l'étape d) est avantageusement présente sur le site d'obtention du film ou article filmogène. Ainsi, avantageusement, les eaux usées issues de la mise en forme du polymère lors de l'étape c) du procédé selon l'invention contenant des traces de molécules portant au moins une fonction sulfoxyde telles que du DMSO (inférieures à 5% en poids par rapport au poids total de l'effluent aqueux) sont traitées sur le site même, avant envoi en station d'épuration.

L'unité de traitement utilisée lors de l'étape d), avantageusement sur le site du fabricant avant envoi en station d'épuration, permet d'éviter les problèmes liés aux odeurs des produits de décomposition du DMSO (ou autres molécules portant au moins une fonction sulfoxyde) présent dans les effluents issus du procédé selon la présente invention tels que par exemple le diméthylsulfure (DMS) dans le cas du DMSO. Ceci permet donc d'éviter des problèmes d'odeur et de plaintes environnementales.

Pour mettre en oeuvre le traitement lors de l'étape d2), l'unité de traitement de ces effluents aqueux contenant des traces de molécules portant au moins une fonction sulfoxyde telles que du DMSO (inférieures à 5% en poids par rapport au poids total des effluents aqueux à traiter), qui est avantageusement présente directement sur le site du fabricant, peut-être de tout type connu de l'homme du métier, et avantageusement il s'agit d'une unité permettant l'oxydation, chimique et/ou biologique et/ou thermique, des molécules portant une fonction sulfoxyde. Dans le cas d'effluents contenant du DMSO, l'oxydation permet de transformer le DMSO en d'autres composés tels que DMSO₂, H₂SO₄, CO₂, SO₂, et autres oxydes de soufre.

Généralement, en prenant exemple sur le DMSO, une oxydation au stade DMSO₂ est suffisante, car le DMSO₂ est beaucoup plus stable que le DMSO et génère donc moins de mauvaises odeurs que le DMSO dans les effluents aqueux issus du procédé de l'invention.

Par exemple, l'étape d'oxydation (pouvant constituer ainsi l'étape de traitement d2)) peut consister à ajouter un oxydant tel que H₂O₂, ozone, air, KNO₃ aux effluents aqueux, avec ou sans catalyseur, le catalyseur pouvant être choisi parmi les rayonnements U.V., le dioxyde de titane TiO₂, le fer, la goethite. L'objectif de l'unité d'oxydation est d'oxyder au moins 50% en poids du DMSO (ou autres molécules contenant au moins une fonction sulfoxyde) contenu dans les eaux usées en DMSO₂, idéalement 80% et encore plus idéalement 100%.

Selon un mode de réalisation, l'étape d'oxydation peut également être un traitement biologique des effluents aqueux par mise en contact des effluents avec des bactéries qui peuvent être présentes dans des boues activées, avantageusement selon les procédés de type MBR (« Membrane Bio Reactor » en langue anglaise).

Selon un autre mode de réalisation les effluents aqueux comportant le DMSO (ou autres molécules contenant au moins une fonction sulfoxyde) peuvent être soumis à un traitement thermique consistant à vaporiser l'eau et à brûler le DMSO (ou autres molécules contenant au moins une fonction sulfoxyde).

Dans un mode de réalisation préféré, les effluents aqueux sont oxydés par traitement chimique et/ou biologique et de préférence par traitement biologique.

Selon un mode de réalisation préféré, ce traitement d) des effluents aqueux issus du procédé selon l'invention est réalisé sur le site de réalisation dudit procédé de l'invention.

Selon un autre mode de réalisation, ce traitement d) des effluents aqueux issus du procédé selon l'invention est réalisé sur un autre site, différent du site de réalisation des étapes a) à c) du procédé de l'invention, par exemple sur un site dédié aux traitements des effluents.

## Revendications

1. Procédé d'obtention d'un film ou article filmogène, ledit procédé comprenant :
a) la fourniture d'un système solvant comprenant au moins une molécule portant une fonction sulfoxyde, ledit système solvant présentant une teneur en eau strictement inférieure à 1000 ppm en poids et présentant un pH supérieur ou égal à 6 ; ledit pH étant mesuré à l'aide d'un pH-mètre à 20°C d'une solution contenant 25% en poids du système solvant et 75% en poids d'eau distillée ;
b) la préparation d'une solution de polymères, soit par dissolution des polymères dans le système solvant de l'étape a) soit par synthèse des polymères dans le système solvant de l'étape a);
c) l'élimination du système solvant par coagulation des polymères de la solution de polymères de l'étape b) pour obtenir le film ou l'article filmogène et des effluents de solvants ;
ladite élimination du système solvant de la solution de polymères de l'étape b) étant effectuée dans un milieu non-solvant desdits polymères et solvant dudit système solvant,
ladite solution de polymères obtenue à l'issue de l'étape b) contenant moins de 1% d'eau par rapport au poids total de la solution de polymères ;
ladite solution de polymères obtenue à l'issue de l'étape b) présentant un pH strictement supérieur à 6 ; et
la solution de polymères comprenant de 1% à 50% en poids de polymère(s), par rapport au poids total de la solution de polymères.

2. Procédé selon la revendication 1, dans lequel la teneur en eau du système solvant est inférieure ou égale à 900 ppm en poids, de préférence inférieure ou égale à 500 ppm en poids, de préférence encore inférieure ou égale à 300 ppm en poids, plus préférentiellement encore inférieure ou égale à 100 ppm en poids, voire inférieure ou égale à 50 ppm en poids.

3. Procédé selon la revendication 1 ou 2, dans lequel le système solvant présente un pH allant de 6 à 14, de préférence de 6 à 10, de préférence encore de 6,5 à 8.

4. Procédé selon l'une quelconque des revendications 1 à 3, dans lequel le système solvant comprend de 5 à 100% en poids, de préférence de 25 à 100% en poids, de préférence encore de 50 à 100% en poids, plus préférentiellement de 65 à 100% en poids, plus préférentiellement encore de 75 à 100% en poids de molécules portant au moins une fonction sulfoxyde, par rapport au poids total du système solvant.

5. Procédé selon l'une quelconque des revendications 1 à 4, dans lequel les molécules portant au moins une fonction sulfoxyde répondent à la formule (1) : 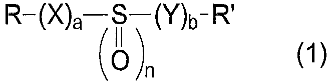 dans laquelle :
- X et Y, identiques ou différents, sont choisis, indépendamment l'un de l'autre, parmi oxygène, soufre, SO, SO₂, NH, et NR" ;
- a et b, identiques ou différents, représentent, indépendamment l'un de l'autre, 0 ou 1 ; n est égal à 1 ou 2 ;
- R, R' et R", identiques ou différents, sont choisis, indépendamment les uns des autres, parmi un radical alkyle, linéaire ou ramifié, contenant de 1 à 12 atomes de carbone, un radical alcényle, linéaire ou ramifié, contenant de 2 à 12 atomes de carbone, et un radical aryle contenant de 6 à 10 atomes de carbone; R, R' et R" pouvant éventuellement être substitués par des radicaux choisis parmi alkyle, alcényle, aryle et halogène, et pouvant éventuellement contenir un ou plusieurs hétéroatomes choisis parmi O, S, N, P et Si ; R et R' pouvant en outre former ensemble et avec les atomes qui les portent, une structure cyclique hydrocarbonée et contenant éventuellement un ou plusieurs hétéroatomes choisis parmi O, S et N, ladite structure cyclique comportant au total 5, 6, 7, 8 ou 9 sommets.

6. Procédé selon l'une quelconque des revendications 1 à 5, dans lequel les molécules portant au moins une fonction sulfoxyde répondent à la formule (1a) : 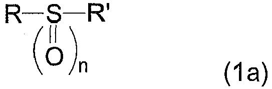 dans laquelle :
R et R', identiques ou différents, sont choisis parmi un radical alkyle, linéaire ou ramifié, contenant de 1 à 4 atomes de carbone, un radical alcényle, linéaire ou ramifié, contenant de 1 à 4 atomes de carbone, et un radical phényle; et
n est égal à 1 ou 2, de préférence égal à 2.

7. Procédé selon l'une quelconque des revendications 1 à 6, dans lequel les molécules portant au moins une fonction sulfoxyde sont des molécules de diméthylsulfoxyde.

8. Procédé selon l'une quelconque des revendications 1 à 7, dans lequel la solution de polymère(s) comprend de 5 à 30% en poids de polymères, par rapport au poids total de la solution de polymère(s).

9. Procédé selon l'une quelconque des revendications 1 à 8, dans lequel les polymères sont choisis parmi les polyuréthanes, polysulfones, polyfluorures de vinylidène, polyéthersulfones, polyphénylsulfones, l'acétate de cellulose, les polyamides, les polyacryliques, les poly-époxy, les polyméthacrylates, les polycarbonates, les silicones, les polymères de vinyle, les polyamide-imides ou les polyimides.

10. Procédé selon l'une quelconque des revendications 1 à 9, dans lequel la solution de polymères est obtenue par dissolution des polymères dans le système solvant de l'étape a) à une température allant de 10°C à 120°C, de préférence allant de 20°C à 100°C, de préférence encore allant de 50°C à 70°C.

11. Procédé selon l'une quelconque des revendications 1 à 10, dans lequel le milieu non-solvant des polymères et solvant du système solvant comprend au moins 20% en poids d'eau, de préférence au moins 40% en poids d'eau, de préférence encore au moins 60% en poids d'eau, encore plus préférentiellement au moins 65% en poids d'eau, idéalement au moins 75% en poids d'eau, par rapport au poids total du milieu non-solvant des polymères et solvant du système solvant.

12. Procédé selon l'une quelconque des revendications 1 à 11, comprenant en outre une étape d) de traitement des effluents de solvants obtenus à l'issue de l'étape c).

13. Procédé selon la revendication 12, dans lequel l'étape de traitement d) comprend une étape préliminaire d1) de séparation, de préférence par distillation, recristallisation, traitement membranaire, les effluents de solvants permettant de récupérer les molécules portant au moins une fonction sulfoxyde telles que le diméthylsulfoxyde d'une part et les effluents aqueux d'autre part.

14. Procédé selon la revendication 12 ou 13, dans lequel l'étape de traitement d) comprend une oxydation, chimique, biologique et/ou thermique, qui est effectuée soit directement sur les effluents de solvants issus de l'étape c) soit sur l'effluent aqueux issu de l'étape préliminaire d1).

15. Procédé selon l'une des revendications 12 à 14, dans lequel l'étape de traitement d) est effectuée sur un site de mise en oeuvre des étapes a) à c) du procédé selon l'une quelconque des revendications 1 à 11.

16. Procédé selon l'une des revendications 12 à 14, dans lequel l'étape de traitement d) est effectuée sur un site différent d'un site de mise en oeuvre des étapes a) à c) du procédé selon l'une quelconque des revendications 1 à 11.

17. Procédé selon l'une des revendications 1 à 16, dans lequel le film ou l'article filmogène est un film plat.

18. Procédé selon l'une des revendications 1 à 17, dans lequel le film ou l'article filmogène est une fibre creuse.

## Patentansprüche

1. Verfahren zur Herstellung eines filmbildenden Films oder Gegenstands, wobei das Verfahren umfasst:
a) die Bereitstellung eines Lösungsmittelsystems, umfassend mindestens ein Molekül mit einer Sulfoxidfunktion, wobei das Lösungsmittelsystem einen Wassergehalt von strikt unter 1000 Gew.-ppm aufweist und einen pH-Wert von 6 oder höher aufweist; wobei der pH-Wert mit einem pH-Meter bei 20°C einer Lösung gemessen wird, die 25 Gew.-% des Lösungsmittelsystems und 75 Gew.-% destilliertes Wasser enthält;
b) die Herstellung einer Polymerlösung, entweder durch Lösen der Polymere in dem Lösungsmittelsystem von Schritt a) oder durch Synthetisieren der Polymere in dem Lösungsmittelsystem von Schritt a);
c) die Entfernung des Lösungsmittelsystems durch Koagulieren der Polymere aus der Polymerlösung von Schritt b), um den Film oder den filmbildenden Gegenstand und die Lösungsmittelabwässer zu erhalten;
wobei die Entfernung des Lösungsmittelsystems aus der Polymerlösung von Schritt b) in einem Medium durchgeführt wird, das kein Lösungsmittel für die Polymere und Lösungsmittel für das Lösungsmittelsystem ist,
wobei die aus Schritt b) erhaltene Polymerlösung weniger als 1 % Wasser, bezogen auf das Gesamtgewicht der Polymerlösung, enthält;
wobei die aus Schritt b) erhaltene Polymerlösung einen pH-Wert von strikt über 6 aufweist; und
wobei die Polymerlösung von 1 Gew.-% bis 50 Gew.-% Polymer(e), bezogen auf das Gesamtgewicht der Polymerlösung, umfasst.

2. Verfahren nach Anspruch 1, bei dem der Wassergehalt des Lösungsmittelsystems kleiner oder gleich 900 Gew.-ppm, vorzugsweise kleiner oder gleich 500 Gew.-ppm., noch bevorzugter kleiner oder gleich 300 Gew.-ppm, noch bevorzugter kleiner oder gleich 100 Gew.-ppm, sogar kleiner oder gleich 50 Gew.-ppm ist.

3. Verfahren nach Anspruch 1 oder 2, wobei das Lösungsmittelsystem einen pH-Wert von 6 bis 14, vorzugsweise von 6 bis 10, besonders bevorzugt von 6,5 bis 8, aufweist.

4. Verfahren nach einem der Ansprüche 1 bis 3, wobei das Lösungsmittelsystem 5 bis 100 Gew.-%, vorzugsweise 25 bis 100 Gew.-%, noch bevorzugter 50 bis 100 Gew.-%, besonders bevorzugt 65 bis 100 Gew.-%, noch bevorzugter 75 bis 100 Gew.-% Moleküle mit mindestens einer Sulfoxidfunktion, bezogen auf das Gesamtgewicht des Lösungsmittelsystems, umfasst.

5. Verfahren nach einem der Ansprüche 1 bis 4, wobei die Moleküle, die mindestens eine Sulfoxidfunktion tragen, der Formel (1) entsprechen: 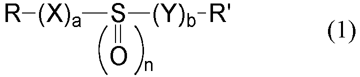 wobei:
- X und Y, die gleich oder verschieden sind, unabhängig voneinander ausgewählt sind aus Sauerstoff, Schwefel, SO, SO₂, NH und NR" ;
- a und b, die gleich oder verschieden sind, unabhängig voneinander 0 oder 1 darstellen; n ist 1 oder 2;
- R, R' und R", die gleich oder verschieden sind, unabhängig voneinander aus einem linearen oder verzweigten Alkylrest mit 1 bis 12 Kohlenstoffatomen, einem linearen oder verzweigten Alkenylrest mit 2 bis 12 Kohlenstoffatomen und einem Arylrest mit 6 bis 10 Kohlenstoffatomen ausgewählt sind; R, R' und R" können gegebenenfalls durch Reste substituiert sein, die unter Alkyl, Alkenyl, Aryl und Halogen ausgewählt sind, und können gegebenenfalls ein oder mehrere Heteroatome enthalten, die unter O, S, N, P und Si ausgewählt sind; R und R' können außerdem zusammen und mit den Atomen, die sie tragen, eine cyclische Kohlenwasserstoffstruktur bilden und gegebenenfalls ein oder mehrere Heteroatome enthalten, die unter O, S und N ausgewählt sind, wobei die cyclische Struktur insgesamt 5, 6, 7, 8 oder 9 Ecken umfasst.

6. Verfahren nach einem der Ansprüche 1 bis 5, wobei die Moleküle, die mindestens eine Sulfoxidfunktion tragen, der Formel (1a) entsprechen: 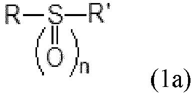 wobei:
R und R', die gleich oder verschieden sind, ausgewählt sind aus einem linearen oder verzweigten Alkylrest mit 1 bis 4 Kohlenstoffatomen, einem linearen oder verzweigten Alkenylrest mit 1 bis 4 Kohlenstoffatomen und einem Phenylrest; und
n ist gleich 1 oder 2, vorzugsweise gleich 2.

7. Verfahren nach einem der Ansprüche 1 bis 6, wobei die Moleküle, die mindestens eine Sulfoxidfunktion tragen, Dimethylsulfoxidmoleküle sind.

8. Verfahren nach einem der Ansprüche 1 bis 7, wobei die Polymerlösung(en) 5 bis 30 Gew.-% Polymere, bezogen auf das Gesamtgewicht der Polymerlösung(en), umfasst.

9. Verfahren nach einem der Ansprüche 1 bis 8, wobei die Polymere ausgewählt sind aus Polyurethanen, Polysulfonen, Polyvinylidenfluoriden, Polyethersulfonen, Polyphenylsulfonen, Celluloseacetat, Polyamiden, Polyacrylaten, Polyepoxiden, Polymethacrylaten, Polycarbonaten, Silikonen, Vinylpolymeren, Polyamidimiden oder Polyimiden.

10. Verfahren nach einem der Ansprüche 1 bis 9, wobei die Polymerlösung durch Auflösen der Polymere in dem Lösungsmittelsystem aus Schritt a) bei einer Temperatur von 10°C bis 120°C, vorzugsweise von 20°C bis 100°C, weiter vorzugsweise von 50°C bis 70°C erhalten wird.

11. Verfahren nach einem der Ansprüche 1 bis 10, wobei das Nicht-Lösungsmittelmedium der Polymere und Lösungsmittel des Lösungsmittelsystems mindestens 20 Gew.-% Wasser, vorzugsweise mindestens 40 Gew.-% Wasser, weiter vorzugsweise mindestens 60 Gew.-% Wasser, noch bevorzugter mindestens 65 Gew.-% Wasser, idealerweise mindestens 75 Gew.- % Wasser, bezogen auf das Gesamtgewicht des Nicht-Lösungsmittelmediums der Polymere und Lösungsmittel des Lösungsmittelsystems, umfasst.

12. Verfahren nach einem der Ansprüche 1 bis 11, das außerdem einen Schritt d) zur Behandlung des aus Schritt c) erhaltenen Lösungsmittelabflusses umfasst.

13. Verfahren nach Anspruch 12, bei dem der Behandlungsschritt d) einen vorbereitenden Schritt d1) zur Trennung, vorzugsweise durch Destillation, Umkristallisation, Membranbehandlung, umfasst, wobei die Lösungsmittelabflüsse es ermöglichen, die Moleküle, die mindestens eine Sulfoxidfunktion wie Dimethylsulfoxid tragen, einerseits und einen wässrigen Abstrom andererseits der Lösungsmittelabflüsse zu gewinnen.

14. Verfahren nach Anspruch 12 oder 13, wobei Behandlungsschritt d) eine Oxidation, chemisch, biologisch und/oder thermisch, umfasst, die entweder direkt an den Lösungsmittelabflüssen aus Schritt c) oder an dem wässrigen Abwasser aus dem Vorschritt d1) durchgeführt wird.

15. Verfahren nach einem der Ansprüche 12 bis 14, wobei der Verarbeitungsschritt d) an einem Ort durchgeführt wird, an dem die Schritte a) bis c) des Verfahrens nach einem der Ansprüche 1 bis 11 durchgeführt werden.

16. Verfahren nach einem der Ansprüche 12 bis 14, wobei der Verarbeitungsschritt d) an einem anderen Ort durchgeführt wird als ein Ort, an dem die Schritte a) bis c) des Verfahrens nach einem der Ansprüche 1 bis 11 durchgeführt werden.

17. Verfahren nach einem der Ansprüche 1 bis 16, wobei die filmbildende Folie oder der filmbildende Gegenstand eine Flachfolie ist.

18. Verfahren nach einem der Ansprüche 1 bis 17, wobei die Folie oder der filmbildende Gegenstand eine Hohlfaser ist.

## Claims

1. A method for obtaining a film or film-forming article, said method comprising:
a) the provision of a solvent system comprising at least a molecule carrying a sulfoxide function, wherein said solvent system has a water content strictly less than 1000 ppm by weight and has a pH greater than or equal to 6; wherein said pH is measured using a pH meter at 20°C of a solution containing 25% by weight of the solvent system and 75% by weight of distilled water;
b) the preparation of a polymer solution, either by dissolving the polymers in the solvent system of step a) or by synthesizing the polymers in the solvent system of step a);
c) the elimination of the solvent system by coagulation of the polymers from the polymer solution of step b) to obtain the film or film-forming article and solvent effluents;
wherein said elimination of the solvent system from the polymer solution of step b) is carried out in a non-solvent medium for said polymers and solvent for said solvent system,
wherein said polymer solution obtained at the end of step b) contains less than 1% water, relative to the total weight of the polymer solution;
wherein said polymer solution obtained at the end of step b) has a pH strictly greater than 6; and
wherein the polymer solution comprises from 1% to 50% by weight of polymer(s), relative to the total weight of the polymer solution.

2. The method according to claim 1, wherein the water content of the solvent system is less than or equal to 900 ppm by weight, preferably less than or equal to 500 ppm by weight, still preferably less than or equal to 300 ppm by weight, still more preferably less than or equal to 100 ppm by weight, or even less than or equal to 50 ppm by weight.

3. The method according to claim 1 or 2, wherein the solvent system has a pH ranging from 6 to 14, preferably from 6 to 10, more preferably from 6.5 to 8.

4. The method according to any one of claims 1 to 3, wherein the solvent system comprises from 5 to 100% by weight, preferably from 25 to 100% by weight, still preferably from 50 to 100% by weight, more preferably from 65 to 100% by weight, still more preferably from 75 to 100% by weight of molecules, carrying at least a sulfoxide function, relative to the total weight of the solvent system.

5. The method according to any one of claims 1 to 4, wherein the molecules carrying at least a sulfoxide function correspond to formula (1): 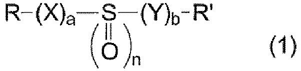 wherein:
- X and Y, identical or different, are chosen, independently of each other, from oxygen, sulphur, SO, SO₂, NH, and NR";
- a and b, identical or different, represent, independently of each other, 0 or 1; n is equal to 1 or 2;
- R, R' and R", identical or different, are chosen, independently of each other, from an alkyl radical, linear or branched, containing from 1 to 12 carbon atoms, an alkenyl radical, linear or branched, containing from 2 to 12 carbon atoms, and an aryl radical containing from 6 to 10 carbon atoms; wherein R, R' and R" may optionally be substituted by radicals, chosen from alkyl, alkenyl, aryl and halogen, and which may optionally contain one or more heteroatoms, chosen from O, S, N, P and Si; wherein R and R' may also form together and with the atoms which carry them, a hydrocarbon cyclic structure and optionally contain one or more heteroatoms, chosen from O, S and N, wherein said cyclic structure comprises in total 5, 6, 7, 8 or 9 ring members.

6. The method according to any one of claims 1 to 5, wherein the molecules carrying at least a sulfoxide function correspond to formula (1a): 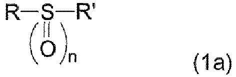 wherein:
R and R', identical or different, are chosen from an alkyl radical, linear or branched, containing 1 to 4 carbon atoms, an alkenyl radical, linear or branched, containing 1 to 4 carbon atoms, and a phenyl radical; and
n is equal to 1 or 2, preferably equal to 2.

7. The method according to any one of claims 1 to 6, wherein the molecules carrying at least a sulfoxide function are dimethyl sulfoxide molecules.

8. The method according to any one of claims 1 to 7, wherein the solution of polymer(s) comprises from 5 to 30% by weight of polymers, relative to the total weight of the solution of polymer(s).

9. The method according to any one of claims 1 to 8, wherein the polymers are chosen from polyurethanes, polysulfones, polyvinylidene fluorides, polyethersulfones, polyphenylsulfones, cellulose acetate, polyamides, polyacrylics, poly-epoxies, polymethacrylates, polycarbonates, silicones, vinyl polymers, polyamide-imides or polyimides.

10. The method according to any one of claims 1 to 9, wherein the polymer solution is obtained by dissolving the polymers in the solvent system of step a) at a temperature ranging from 10°C to 120°C, preferably ranging from 20°C to 100°C, more preferably ranging from 50°C to 70°C.

11. The method according to any one of claims 1 to 10, wherein the non-solvent medium of the polymers and solvent of the solvent system comprise at least 20% by weight of water, preferably at least 40% by weight of water, still preferably at least 60% by weight of water, still more preferably at least 65% by weight of water, ideally at least 75% by weight of water, relative to the total weight of the non-solvent medium of the polymers and solvent of the solvent system.

12. The method according to any one of claims 1 to 11, further comprising a step d) of treating the solvent effluents obtained at the end of step c).

13. The method according to claim 12, wherein the treatment step d) comprises a preliminary step d1) of separation, preferably by distillation, recrystallization, membrane treatment, of the solvent effluents making it possible to recover the molecules carrying at least a sulfoxide function such as dimethyl sulfoxide on the one hand and the aqueous effluents on the other hand.

14. The method according to claim 12 or 13, wherein treatment step d) comprises chemical, biological and/or thermal oxidation, which is carried out either directly on the solvent effluents resulting from step c) or on the aqueous effluent from the preliminary step d1).

15. The method according to any one of claims 12 to 14, wherein the treatment step d) is carried out on a site for implementing steps a) to c) of the method according to any one of claims 1 to 11.

16. The method according to any one of claims 12 to 14, wherein the treatment step d) is carried out on a site different from a site for implementing steps a) to c) of the method according to one any of claims 1 to 11.

17. The method according to any one of claims 1 to 16, wherein the film or the film-forming article is a flat film.

18. The method according to any one of claims 1 to 17, wherein the film or the film-forming article is a hollow fibre.
